# DEMANDE DE BREVET EUROPEEN

(11) **EP 0 814 310 A1**
(43) Date de publication de la demande: **29.12.1997**
(21) Numéro de dépôt: 97111828.6
(22) Date de dépôt: 11.04.1994
(51) Int. Cl.: F25J 3/04

(54) **Procédé et installation pour la séparation de l'air**

(30) Priorité: 29.04.1993 FR 9305062; 28.09.1993 FR 9311509
(62) Demande divisionnaire de: 94400772.3
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Darredeau, Bernard, 78500 Sartrouville (FR); Lehman, Jean-Yves, 94700 Mainsons-Alfort (FR); Peyron, Jean-Marc, 94000 Creteil (FR)
(74) Mandataire: Mercey, Fiona Susan

(57) **Abrégé**

Dans un procédé pour la séparation de l'air, pour maintenir constantes les puretés des produits gazeux d'une colonne de distillation (24), on introduit un excédent d'un liquide riche en azote dans la colonne (24) si la demande de produit et le débit d'air d'alimentation augmentent. Lorsqu'ils diminuent, on retire un excédent du liquide riche en azote de la colonne (24).

## Description

La présente invention est relative à la technique de séparation d'air dans une colonne de distillation.

Il est apparu dans les dernières années une demande pour des variations de marche rapides pour les appareils de séparation d'air (ASU). En particulier, cette demande se présente pour la technique de séparation d'air dans une colonne de distillation où l'oxygène produit est utilisé dans une centrale électrique de type IGCC (Integrated Gasifier Combined Cycle).

Dans des centrales électriques de ce type, récemment développées, l'électricité est produite à partir de charbon et d'oxygène. En raison de la demande variable en électricité des usagers, il est nécessaire que l'alimentation en oxygène suive également cette demande variable et que la pureté de l'oxygène soit constante (typiquement supérieure à 80 % pour les besoins du gazéifieur).

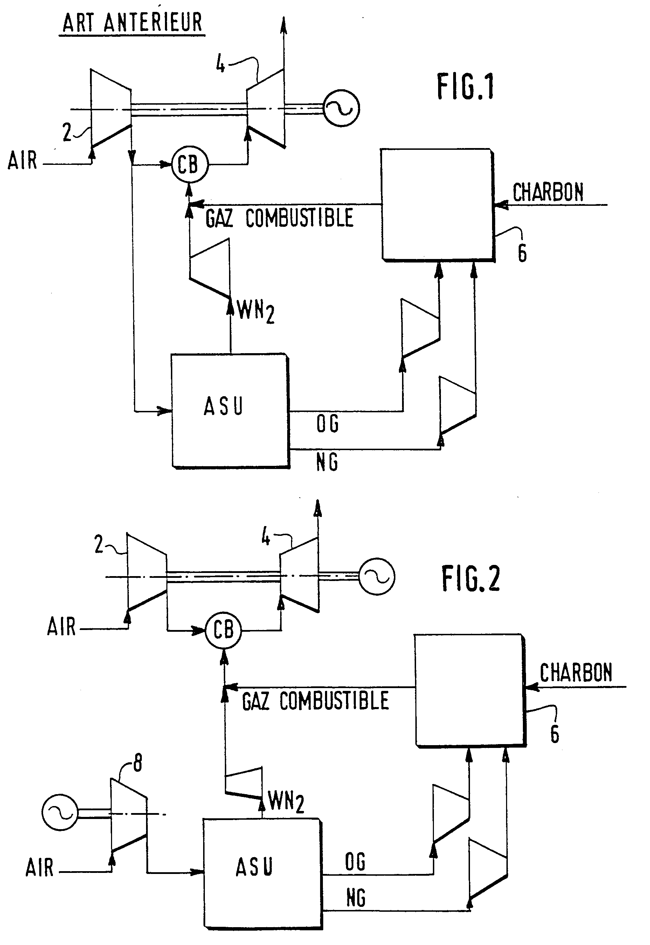

Dans le cas où l'unité de séparation d'air est associée à ladite centrale de type IGCC (figure 1), l'air de l'ASU qui est issu du compresseur 2 couplé mécaniquement à une turbine à gaz 4, a son débit et sa pression qui fluctuent. En effet, la variation rapide de la demande en électricité couplée à celle de l'oxygène envoyé à l'IGCC, entraîne une variation des gaz combustibles produits dans le gazéifieur 6 et une variation des gaz de combustion. Il en résulte une variation rapide du débit et de la pression de l'air comprimé dans le compresseur 2 et, par conséquent, du débit et de la pression de l'air envoyé à l'ASU.

Le problème qui se pose est donc de permettre à l'ASU de produire l'oxygène en quantité variable mais suffisante pour s'adapter à la demande variable en électricité, tout en maintenant une pureté constante pour répondre aux critères du gazéifieur 6 de l'IGCC, malgré les fluctuations de débit d'air consécutives à cette variation de demande électrique pour une ASU intégrée. Simultanément, l'azote résiduaire étant envoyé après compression à la turbine à gaz 4, il est imposé de maintenir la teneur en oxygène de cet azote en-dessous de certaines limites. Il faut donc maintenir la pureté de tous les produits de la distillation.

Lorsque le compresseur d'air 8 de l'ASU est indépendant du compresseur 2 de la turbine à gaz 4 (figure 2), le problème pour l'ASU est de fournir le bon débit d'oxygène envoyé au gazéifieur 6, en s'adaptant rapidement à la demande de celui-ci. Dans ce cas, le débit du compresseur d'air 8 varie approximativement comme le débit d'oxygène et sa pression de refoulement varie relativement peu.

L'objet de l'invention est de proposer une solution qui réponde à ces deux problèmes.

Une solution au problème posé par la variation de pression de l'air et de la colonne de distillation est proposée par la demande de brevet EP-A-0.519.688, comportant l'injection d'azote liquide dans la colonne, lorsque la pression diminue, et un soutirage et stockage d'azote liquide dans le cas contraire. Cette solution est destinée à compenser les phénomènes suivants :
- la génération de gaz de flash importante quand la quantité de liquide contenu dans la colonne (inventaire ou "hold-up") est importante et quand la pression baisse,
- le gaz de flash généré est riche en oxygène et rend la production d'azote pur plus difficile.

Par contre, le procédé selon EP-A-0.519.688 ne corrige pas le phénomène prépondérant qui se produit dans les colonnes de distillation pendant un changement de marche. Il s'agit de la variation d'inventaire de liquide se trouvant dans les colonnes. Cet inventaire est réduit de façon importante quand on réduit les débits de liquides, c'est-à-dire quand on réduit le débit d'air traité dans l'ASU. On se trouve alors avec un excédent de liquide que l'on doit évacuer si l'on ne veut pas retrouver tous les liquides en bas des colonnes et observer une perte de pureté des produits soutirés à ce point (en particulier l'oxygène).

L'invention a pour but de proposer une solution qui puisse répondre au problème posé par le changement rapide de débit d'air dans les colonnes de distillation (à garnissages ou plateaux).

En effet, les colonnes se comportent parfois de façon telle que, lorsqu'on fait varier le débit d'air de façon rapide, l'inventaire varie de façon plus importante autant du fait de cette variation que du fait de la production de gaz de flash ou de sa recondensation lors de la variation de pression. De façon inattendue, malgré l'importance des volumes de liquide sur colonnes de distillation, qui entraîne une vaporisation importante en cas de baisse de pression par exemple, la variation de ces volumes, du fait de la variation du débit, est encore plus importante de telle sorte qu'il est nécessaire, pour maintenir les teneurs des produits, de réduire le reflux en azote liquide en cas de baisse du débit d'air et de majorer ce reflux en cas d'augmentation du débit d'air.

La Demanderesse a donc découvert, de façon surprenante, qu'il faut faire exactement l'inverse de ce qui est décrit dans le brevet EP-A-0.519.688 en cas de changement de débit d'air pour une colonne de distillation comportant des plateaux perforés ou des garnissages structurés.

A cet effet, l'invention a pour objet un procédé de régulation d'une installation de séparation de l'air par distillation selon l'une des revendications 1 et 2.

La Demanderesse a découvert un phénomène tout à fait surprenant : quand on réduit la production et, par conséquent, les débits de gaz et de liquide traités dans au moins une colonne, on découvre que le comportement de cette (ces) colonne(s) est tel qu'il faut non plus injecter de l'azote liquide mais au contraire soutirer de l'azote liquide en cas de réduction de marche et de pression et en injecter en cas d'augmentation de charge (et des pressions).

L'explication est la suivante : quand on réduit la charge et les débits de gaz et de liquide dans la colonne (et la pression), il se produit deux phénomènes en sens inverse.

Le premier phénomène, lié à la réduction de pression, est un flash des liquides contenus dans la colonne. La quantité de gaz de flash générée est fonction de la chute de pression et de la quantité de liquide contenue dans la colonne.

Le deuxième phénomène est le changement d'inventaire de liquide dans la colonne qui résulte de la variation des débits de gaz et de liquide traités.

Or, de façon surprenante et contrairement à ce qui était généralement considéré jusqu'ici, on a découvert que le deuxième phénomène est prépondérant, même dans une colonne ayant essentiellement des plateaux perforés, quand la pression varie de façon sensiblement proportionnelle au débit d'air et, a fortiori, quand elle varie dans des proportions moindres que le débit d'air (ce qui est généralement le cas). La réduction d'inventaire de liquide, quand on réduit la charge, se traduit dans une colonne à plateaux par un excès de liquide situé sur chaque plateau (et dans une colonne à garnissage, par un excès de liquide situé dans chaque distributeur) qu'il faut évacuer si on veut éviter d'avoir un excès de reflux et une accumulation de liquide en cuve de la colonne avec une perte de pureté de l'oxygène puisque, simultanément, le chauffage en cuve de la colonne BP par condensation de l'azote, est réduit.

La découverte tout à fait surprenante que la Demanderesse a faite en étudiant le comportement de colonnes à plateaux perforés et à garnissages en changement de marche rapide est donc que, non seulement elles permettent d'éviter de perdre la pureté de l'azote au cours de la phase transitoire, mais qu'elles nécessitent, pour maintenir la pureté de l'oxygène, de prévoir un soutirage d'azote liquide, quand on réduit la marche et la pression, et une injection d'azote liquide quand on veut augmenter les productions, ceci afin de garnir les plateaux (ou dans une colonne à garnissages, le distributeur au sommet de la colonne) pour maintenir à tout moment un reflux suffisant en reconstituant l'inventaire suffisamment vite.

Une autre amélioration de la réponse de l'appareil pendant les changements de marche est apportée par les dispositions suivantes : le problème de réglage essentiel pendant la phase transitoire est de contrôler les flux gazeux montant dans la colonne pour maintenir les puretés aux deux extrémités (oxygène et azote). Or, le maintien de ces deux puretés pourrait devenir incompatible en situation transitoire. Il est donc tout à fait intéressant de pouvoir rendre relativement indépendant pendant la phase transitoire le réglage de la pureté de l'oxygène et celui de l'azote. Si la colonne de distillation comprend une colonne BP et une colonne MP, on améliore beaucoup les conditions de distillation dans la partie supérieure de la colonne BP quand on réduit le débit de la turbine d'insufflation (dans le cas où on turbine de l'air qui alimente la colonne BP). Une amélioration du contrôle de l'ASU en changement de marche est donc de réduire pendant la phase transitoire le débit de la turbine d'insufflation en dessous de ce qu'il devrait être à l'équilibre à chaque instant, ceci permettant d'améliorer les puretés de l'oxygène et de l'azote à la fois, donc de mieux les contrôler. On peut faire la même chose avec une turbine détendant de l'azote MP, dans le cas où la diminution d'azote MP turbiné est utilisée pour apporter un supplément de reflux et donc améliorer la distillation en colonne MP, et par suite dans la colonne BP.

Enfin, si le procédé comporte un cycle de soutien de distillation, on peut augmenter le débit de ce cycle en période transitoire ou réduire le débit de la turbine éventuellement associée à ce cycle.

Plusieurs exemples de réalisation de l'invention vont maintenant être décrits, en regard des dessins annexés, sur lesquels :
- la figure 3 représente un schéma de principe de deux formes de réalisation d'une installation selon l'invention ;
- les figures 4 et 5 représentent des schémas de principe d'autres formes de réalisation d'une installation selon l'invention ;
- la figure 6 représente un moyen de stockage selon l'invention ; et
- les figures 7 et 8 représentent les schémas de principe des figures 3 et 5, respectivement, illustrant les moyens de régulation.

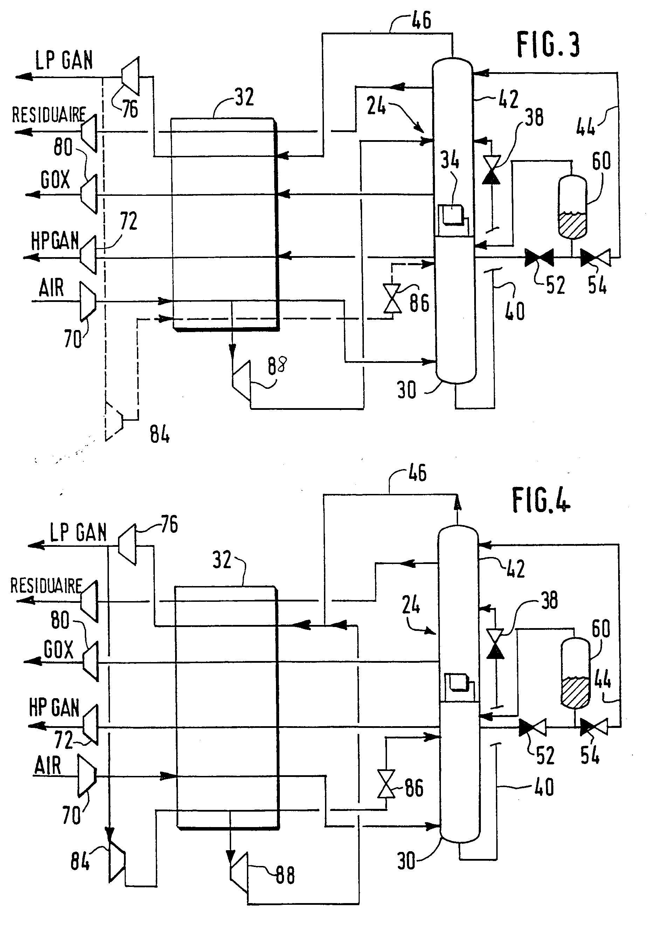

Dans la figure 3, l'air est comprimé dans un compresseur 70 et est refroidi dans un échangeur de chaleur 32. L'air refroidi entre en cuve de la colonne moyenne pression (MP) 30 d'une double colonne de distillation 24. La colonne 24 est équipée de plateaux perforés. Or, les plateaux peuvent être au moins partiellement remplacés par des garnissages (structurés ou en vrac).

Dans la colonne MP 30, l'air est séparé en une vapeur d'azote et un liquide de cuve enrichi en oxygène. Une partie de la vapeur passe à un condenseur 34 dans la colonne basse pression (BP) où elle se condense et revient en reflux à la colonne MP 30. L'azote haute pression est soutiré de la colonne MP et l'autre partie est réchauffée dans l'échangeur 32 puis comprimé par un compresseur 72. Le liquide de cuve enrichi en oxygène est soutiré de la colonne MP 30 et injecté dans la colonne BP 42, par la ligne 40.

Pour produire un reflux pour la colonne BP 42, on soutire de l'azote liquide de la partie supérieure de la colonne MP 30, via la ligne 44, et on l'injecte dans la tête de la colonne BP 42. L'azote liquide de reflux, de ligne 44, et le liquide de cuve, de ligne 40, sont distillés pour produire de l'azote gazeux à basse pression (LP GAN) et de l'oxygène liquide.

Lorsque la demande en oxygène est constante, la pression dans la colonne 24 est maintenue grâce à des moyens de contrôle des débits d'oxygène et d'azote retirés de la colonne 24. La totalité de l'azote qui circule dans la conduite de reflux est envoyée en reflux de colonne 42. Rien n'est stocké dans la citerne 60 ; les vannes 52, 54 en amont et en aval de la citerne 60 contrôlent les débits qui y sont introduits et qui en sont soutirés.

Lorsque la demande en oxygène est moindre, la quantité de liquide dans la colonne 24 diminue et, par conséquent, il faut retirer un excédent du liquide riche en azote pour éviter un excès de reflux. On transfère ce liquide de la colonne 24 à la citerne 60 grâce à une réduction de débit de la conduite 44. En même temps, on soutire moins d'azote par la conduite 46.

Lorsque la demande en oxygène croît, pour maintenir un reflux suffisant dans l'appareil, on augmente le débit de la conduite 44 avec la vanne 54 et on injecte un excédent d'un liquidé riche en azote.

Les figures 3, 4 et 5 illustrent quatre variantes, qui peuvent d'ailleurs être combinées, destinées à assurer la pureté des gaz produits.

Dans la figure 3, une partie de l'air d'alimentation comprimé par le compresseur 70 est détendu par une turbine d'insufflation 88 puis introduite dans la colonne basse pression 42.

On a représenté en traits pointillés sur la figure 3 un cycle de soutien : ici, une partie de l'azote comprimé par le compresseur 76 est comprimé par un autre compresseur 84, avant injection en tête de la colonne moyenne pression 30, afin de servir de soutien de rectification. Le gaz renvoyé dans la colonne MP 30 permet de soutirer davantage de liquide de la tête de colonne MP 30 vers la colonne BP 42 améliorant par conséquent le taux de reflux de la colonne BP 42 et donc sa capacité de distillation.

Ce soutien de rectification est utile également pendant les variations de charge de l'appareil. En cas de demande accrue d'oxygène gazeux, le soutien de rectification est augmenté en avance et donc plus rapidement que la charge de l'appareil, reculant d'autant les limites de décrochage des puretés. En cas de réduction, le soutien est diminué plus lentement que la charge de l'appareil.

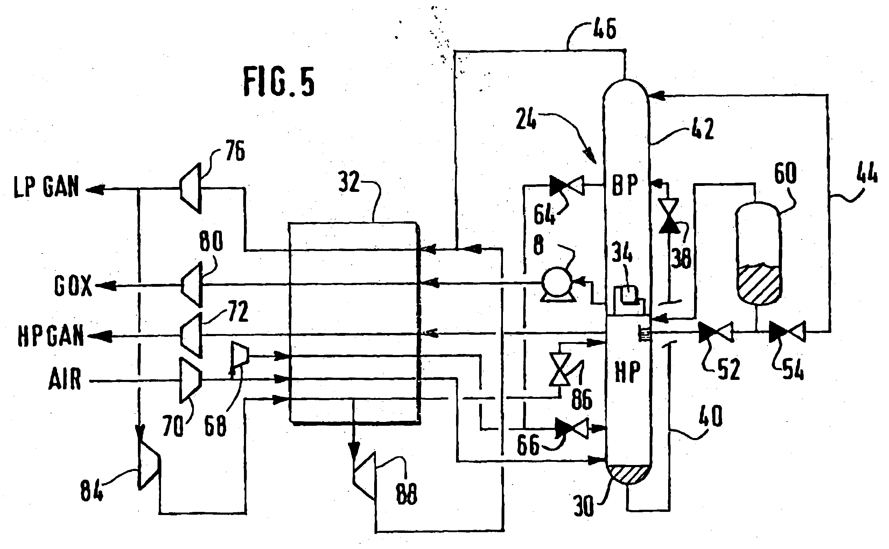

Un cycle de soutien est aussi illustré dans la figure 4 : ici, une partie de l'azote du cycle de soutien est détendu par une turbine de détente 88 après refroidissement partiel et recyclé après chauffage dans le compresseur 76.

Dans la figure 5, l'installation illustrée est une variante de celle de la figure 4. Une partie de l'air comprimé par le compresseur 70 est surpressée dans le compresseur 68 avant d'être refroidie dans l'échangeur 32. Cette partie recomprimée est divisée en deux fractions sous forme liquide, dont une est introduite dans la colonne MP 30 et dont l'autre est introduite dans la colonne BP 42.

De l'oxygène est soutiré sous forme liquide de la cuve de la colonne BP 42 et passe à l'échangeur 32 après compression dans une pompe 82 et est vaporisé à contre-courant de l'air surpressé.

Lors d'une réduction de la demande en oxygène, et une réduction de la pression de l'air, le débit d'air comprimé et liquéfié dans la ligne d'échange 32 est réduit moins vite que le débit de liquide riche en oxygène qui est vaporisé dans la ligne d'échange, afin que l'excédent de débit d'air surpressé absorbe au moins en partie l'excédent de réfrigération apporté par le déséquilibre entre les débits des gaz se réchauffant et des gaz se refroidissant dans la ligne d'échange pendant cette phase.

Lors d'une augmentation de la demande en oxygène, et une augmentation de la pression de l'air, le débit d'air comprimé et liquéfié est augmenté moins vite que le débit de liquide riche en oxygène qui est vaporisé dans la ligne d'échange, pour compenser le déséquilibre thermique qui se produit dans la ligne d'échange pendant cette phase résultant du déséquilibre du débit entre les produits se réchauffant et les produits se refroidissant dans celle-ci.

Le débit d'air surpressé permet de contrecarrer un déséquilibre de la ligne d'échange 32 dans les phases transitoires en modulant le débit total de calorigènes.

En cas de baisse de charge, le débit d'air surpressé sera maintenu supérieur à la corrélation normale débit d'oxygène/débit d'air surpressé. En cas d'augmentation de charge, on fera le contraire.

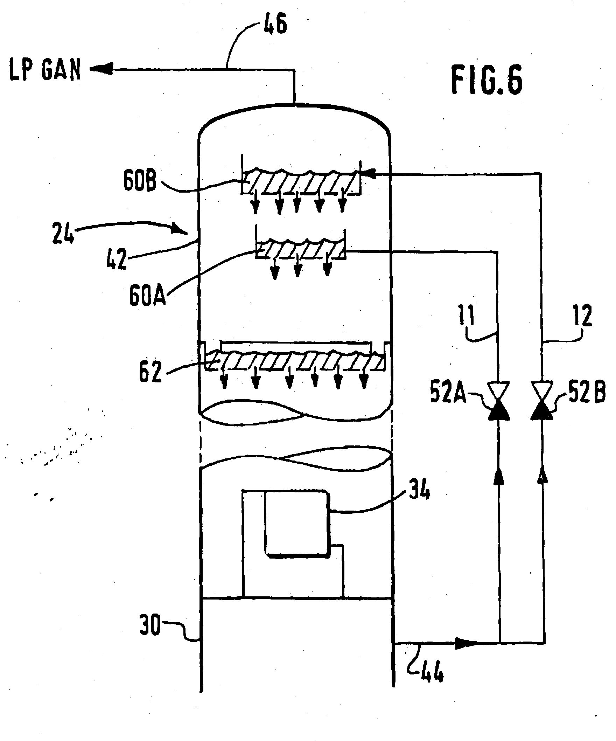

En variante, on peut remplacer la citerne 60 par un réservoir dans la colonne BP 42 au-dessus du distributeur de tête dans une colonne à garnissages (structurés ou en vrac) illustrée dans la figure 6. Le réservoir 60B est dimensionné pour laisser passer 50 % du débit nominal. Dans ces conditions, le volume de liquide qu'il contient est équivalent au volume de liquide que l'on veut stocker. Les deux réservoirs 60A, 60B sont reliés par les conduites 11, 12 aux vannes 52A, 52B respectives, elles-mêmes reliées à la tête de la colonne MP 30 par deux conduites.

L'association (O, F/ouverte, fermée) des vannes 52A, 52B, respectivement, fournit le régime 100 %. L'association (F, O) alimente seulement le réservoir 60B et fournit le régime 50 %. L'ouverture plus ou moins grande des vannes 52A, 52B, fournit le régime intermédiaire entre chacune des marches limites.

L'homme de l'art reconnaîtra que cette variante est un moyen de stockage qui convient à plusieurs procédés de distillation et à des types d'installation autres que ceux qui sont illustrés aux figures 3 à 5. Elle permet de stocker le liquide riche en azote à basse pression.

Si, dans les figures 3 à 5, la colonne de distillation 24 est toujours équipée d'un vaporiseur principal à film 34, l'homme de l'art reconnaîtra que ce vaporiseur n'est pas un élément essentiel de l'invention et peut être remplacé par d'autres dispositifs.

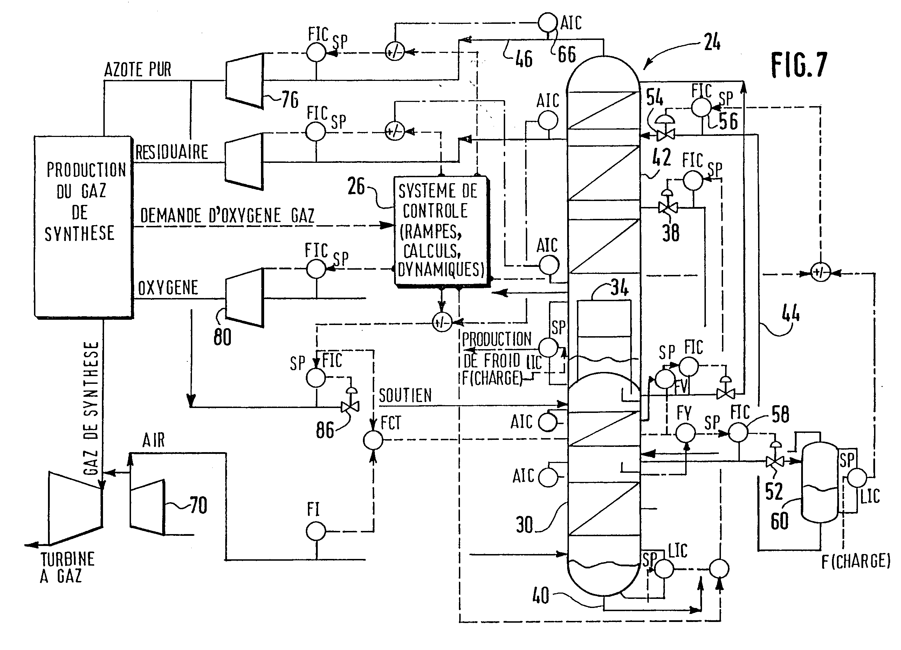

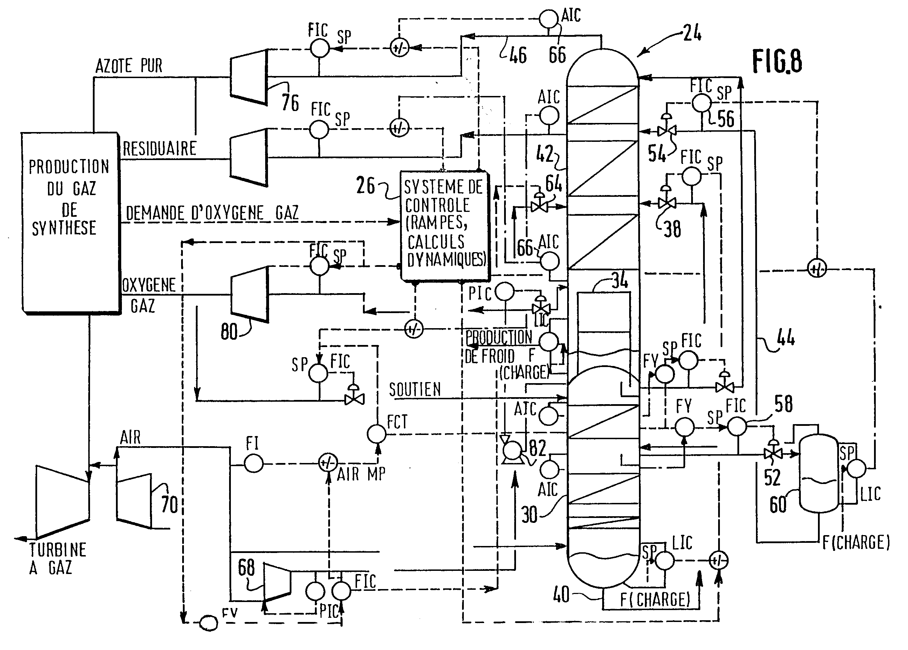

Les figures 7 et 8 illustrent en grand détail les moyens de régulation dans des installations des figures 3 (comprenant les caractéristiques représentées en traits pointillés), et 5, respectivement.

Les moyens de régulation comprennent des éléments de régulation connus tels que des FIC ("flow controllers") 56, 58, pour contrôler les débits, des AIC ("Analysis controllers") 66 et un ordinateur 26 qui relie tous les autres éléments et contrôle leurs fonctions.

Pour un point de fonctionnement stable, les débits sortant de l'appareil (résiduaire, oxygène gaz et azote gaz) définissent par bilan de matière le débit d'air entrant dans l'unité.

En cas de demande d'augmentation de charge, il suffit d'augmenter les débits gazeux sortant de la colonne BP 42 pour admettre plus de débit d'air dans la colonne MP 30. En effet, la pression de la colonne BP 42 baisse, augmentant l'écart moyen de température du vapo-condenseur et donc sa capacité de condensation (le débit d'air appelé dans la colonne MP 30 augmente).

En cas de demande de diminution de charge, il suffit de diminuer les débits gazeux sortants de la colonne BP 42 pour admettre moins de débit d'air dans la colonne MP 30. Le débit d'air admis augmente ou diminue de lui-même à la valeur nécessaire pour la production d'oxygène demandée à la pureté requise.

Le liquide entrant dans la citerne 60 venant du piquage de liquide pauvre de la colonne MP 30 est régulé par un FIC (flow controller) 58 agissant sur la vanne 52 d'envoi de liquide à la citerne 60. Son point de consigne est une fonction linéaire du débit d'air entrant dans la colonne MP 30, filtrée par une fonction dynamique prenant en compte les retards et le type de compensation dynamique (time delay, lead-lag, ramp...) permettant de gérer la rétention liquide de la colonne MP 30.

Le liquide sortant de la citerne 60 vers l'arrivée de liquide pauvre dans la colonne BP 42 est régulé par un FIC 56 agissant sur la vanne 54 d'envoi du liquide vers la colonne BP 42. Son point de consigne est une fonction dynamique prenant en compte le débit d'air calculé à partir de la demande d'oxygène gazeux traité par une rampe et une fonction de compensation dynamique permettant de gérer la rétention liquide du tronçon de colonne BP 42 situé entre l'arrivée de liquide pauvre et de liquide riche.

En état transitoire, les deux FIC 56, 58 ayant des points de consigne gérés par des dynamiques différentes, la citerne 60 se remplit ou se vide en descente ou augmentation de marche, respectivement.

En état stable, le FIC 56 sur le débit sortant est asservi à la régulation de niveau de la citerne 60 ; son point de consigne est bien sûr ajusté en fonction de la charge de l'appareil. Le point de consigne du FIC 58 installé sur le liquide entrant dans la citerne 60 est corrigé par la sortie du régulateur de pureté de l'azote soutiré de la tête de colonne MP 30.

Le flash généré par les variations de pression des colonnes induit en transitoire un déséquilibre de la ligne d'échange.

En cas de baisse de charge, les débits frigorigènes sont plus grands que les calorigènes ; en augmentation de charge, c'est le contraire.

En régime permanent, la pureté de l'oxygène gazeux est un résultat du rapport débit d'oxygène/débit d'air. En conséquence, pour un débit d'oxygène gazeux donné, l'amélioration de la pureté oxygène s'obtient en augmentant le débit d'air, donc en augmentant le débit de résiduaire par rapport au débit d'oxygène gazeux.

Pour une colonne BP 42 donnée et un débit d'oxygène donné, la pureté du résiduaire est une conséquence. Si on dispose du soutien de rectification, cela permet d'augmenter la capacité de distillation de la colonne BP 42 et donc l'ajustement relatif des puretés oxygène et résiduaire.

En régime permanent, un AIC 66 dont la mesure est la teneur en oxygène dans le résiduaire vient corriger l'ajustement du débit de soutien.

Cette invention s'applique également aux appareils comportant une colonne de distillation comprenant des garnissages structurés ou en vrac ou des plateaux perforés. Un appareil selon l'invention peut aussi comprendre une combinaison de garnissages et de plateaux perforés.

## Revendications

1. Procédé de régulation d'une installation de séparation d'air par distillation, l'installation comprenant une colonne moyenne pression (30) et une colonne basse pression (42) comprenant les étapes suivantes :
i) envoyer de l'air à la colonne moyenne pression
ii) envoyer du liquide de la cuve de la colonne moyenne pression à la colonne basse pression caractérisé en ce que
iii) l'on règle le niveau de la cuve en fonction de la charge.

2. Procédé de régulation d'une installation de séparation d'air par distillation, l'installation comprenant une colonne moyenne pression (30) et une colonne basse pression (42) dans lequel on règle le niveau du liquide du condenseur de cuve (34) de la colonne basse pression en fonction de la charge.

3. Procédé selon la revendication 1 ou 2 dans lequel on règle le niveau de la cuve de colonne basse pression ou moyenne pression uniquement en fonction de la charge.
